(19) **Europäisches Patentamt**

**European Patent Office**

**Office européen des brevets**

(11) **EP 0 919 444 B1**

(12) **EUROPEAN PATENT SPECIFICATION**

(45) Date of publication and mention
of the grant of the patent:
**02.05.2003 Bulletin 2003/18**

(51) Int Cl.$^7$: **B60T 8/00**, B60T 8/24

(21) Application number: **97930847.5**

(86) International application number:
**PCT/JP97/02510**

(22) Date of filing: **18.07.1997**

(87) International publication number:
**WO 98/006609 (19.02.1998 Gazette 1998/07)**

(54) **BRAKE FORCE CONTROL DEVICE**

BREMSKRAFTSTEUERVORRICHTUNG

DISPOSITIF POUR REGULER LA PUISSANCE DE FREINAGE

(84) Designated Contracting States:
**DE FR GB**

(30) Priority: **14.08.1996 JP 21456096**

(43) Date of publication of application:
**02.06.1999 Bulletin 1999/22**

(73) Proprietor: **TOYOTA JIDOSHA KABUSHIKI
KAISHA
Aichi-ken 471-8571 (JP)**

(72) Inventors:
• **YOSHIDA, Hiroaki
Toyota-shi, Aichi-ken 471 (JP)**
• **YONEYAMA, Masatoshi
Toyota-shi, Aichi-ken 471 (JP)**

(74) Representative: **Winter, Brandl & Partner
Patent- und Rechtsanwaltskanzlei
Alois-Steinecker-Strasse 22
85354 Freising (DE)**

(56) References cited:
**JP-A- 4 135 958    JP-A- 4 221 263
JP-A- 7 228 229    JP-A- 9 011 871**

**Description**

TECHNICAL FIELD

The present invention relates to a brake force control apparatus, and more particularly, to a brake force control apparatus suitable for use as an apparatus for controlling the brake force generated by an automobile brake apparatus.

BACKGROUND OF THE INVENTION

Conventionally, for example as disclosed in Japanese Laid-Open Patent Application 4-121260, which forms the basis for the preamble of claim 1, a brake force control apparatus which, when emergency braking is deemed required, increases the brake fluid pressure and generates a greater brake force than that generated during normal operation in response to pressure on the brake pedal is known. Increasing the brake fluid pressure and generating a greater brake force increases the volume of brake fluid injected into the wheel cylinder per a given time unit. Thus, according to the apparatus described above, after emergency braking is performed the wheel cylinder pressure can be expected to rise; that is, it is possible to raise the brake force immediately. Hereinafter, control that generates a higher brake fluid pressure and a greater brake force when emergency braking is required as described above shall be referred to as brake assist control (BA control).

When an automobile accelerates or brakes a frictional force toward the front or rear of the vehicle is generated at the tires. This frictional force acts as a driving force or a braking force on the vehicle. In addition, as the vehicle turns a frictional force toward the inside of the direction of the turn is generated at the tires. This frictional force acts as a cornering force on the vehicle.

When an automobile is accelerated or braked during a turn, a frictional force that combines the frictional force toward the inside of the turn with the frictional force toward the front or rear of the vehicle is generated at the tires. The maximum value of the combined frictional force that can be generated at the tires is determined by the grip capability of the tires, the road surface friction μ and the vertical load on the tires.

Automobile tires have practically identical grip capability characteristics regardless of the direction of the combined frictional force. Under constant tire vertical load and road surface friction μ conditions, the tip of a vector that corresponds to the maximum value of the combined frictional force that can be generated would trace a circle if wound around the center of contact of the tire. Hereinafter this circle is referred to as the tire frictional circle.

Automobile tires, depending on the state of motion of the vehicle, generate combined frictional forces in a variety of directions within the limits of the frictional circle. Therefore, when an automobile is accelerated or braked during a turn and a frictional force is generated toward the front or rear of the vehicle as a result, the cornering force that can be generated at the tires is reduced compared to what could have been obtained prior to the commencement of the acceleration or braking.

In addition, the diameter of the frictional circle increases as the road surface friction μ increases or the tire vertical load increases. When an automobile is braked, the load shift increases the vertical load on the front wheels and decreases the vertical load on the rear wheels. Thus, when braking commences the frictional circle of the front wheels increases while the frictional circle of the rear wheels decreases.

The conventional apparatus as described above always performs BA control in the same manner when emergency braking is required regardless of whether the vehicle is in a turn or not. When BA control is performed while the automobile is in a turn, a large frictional force is generated toward the rear of the vehicle at both the front wheels and the rear wheels. The frictional circle increases when BA control is commenced, and thus the effect is that, with respect to the front wheels, the cornering force does not greatly decrease even though a frictional force toward the rear of the vehicle is generated.

However, with respect to the rear wheels, as BA control is commenced there appears the phenomenon of the frictional circle decreasing with the addition of the frictional force toward the rear of the vehicle. Thus, when BA control is performed while the vehicle is in a turn, the cornering force generated at the rear wheels decreases and the vehicle tends to oversteer.

DISCLOSURE OF THE INVENTION

The present invention was devised in contemplation of the problem described above, and it is an object of the present invention to provide a brake force control apparatus that generates a large brake force and at the same time suppresses the tendency of the vehicle to oversteer when emergency braking is required while the vehicle is in a turn.

The object described above is achieved by a brake force control apparatus that performs brake assist control to increase brake fluid pressure in order to generate a greater brake force than that generated during normal operation when it has been determined that emergency braking has been performed by the driver, wherein the brake force control apparatus comprises:

　　turn condition detecting means that detect a turn characteristic value that corresponds to a turn condition of the vehicle; and
　　rear wheel brake force suppressing means that reduce an increase in brake fluid pressure of the rear wheels compared to an increase in brake fluid pressure of the front wheels attendant upon performance of said brake assist control when a turn characteristic value exceeding a predetermined value has been detected.

In the present invention, if the vehicle is turning so sharply that a turn characteristic value exceeding a predetermined value is detected, then the brake fluid pressure of the front wheels is adjusted so that a greater brake force than that generated during normal operation can be generated by the driver executing emergency braking. At this point, the brake fluid pressure of the rear wheels is adjusted so as to generate a smaller brake force than that which could be generated from the brake fluid pressure of the front wheels. By performing brake assist control the frictional circle of the rear wheels decreases. However, by reducing the amount of increase in the brake fluid pressure of the rear wheels attendant upon performance of brake assist control as described above, the amount of reduction in the cornering force of the rear wheels is reduced. By reducing the amount of reduction in the cornering force of the rear wheels the tendency of the vehicle to oversteer is reduced.

In the configuration described above, said rear wheel brake force suppressing means may comprise rise slope reducing means for reducing the rise slope of the brake fluid pressure of the rear wheels attendant upon the execution of brake assist control as compared to the rise slope that is achieved when a turn characteristic value exceeding a predetermined value is not detected.

In this configuration, the rate of rise in the brake fluid pressure of the rear wheels attendant upon brake assist control is decreased when a turn characteristic value exceeding a predetermined value is detected, in other words when the vehicle is in a sharp turn, as compared to when the vehicle is not in a sharp turn. Thus, the brake fluid pressure of the rear wheels rises gradually after the brake assist control has commenced when the vehicle is in a sharp turn.

In addition, said rear wheel brake force control means according to the brake force control apparatus described above may comprise assist prohibiting means that prohibit the execution of brake assist control at the rear wheels.

In this configuration, brake assist control at the rear wheels is prohibited when the vehicle is in a sharp turn. In this case, the change in the brake force attendant upon the execution of brake assist control is performed only at the front wheels.

BRIEF DESCRIPTION OF DRAWINGS

FIG. 1 is a diagram of a system structure of a brake force control apparatus of a first embodiment of the present invention;
FIG. 2 is a diagram for explaining a cornering force generated at the wheels when a vehicle is turning;

FIG. 3 is a first diagram for explaining the cornering force and braking force generated at the wheels when braking a vehicle while the vehicle is turning;
FIG. 4 is a diagram for explaining changes in handling characteristics generally generated when braking a vehicle while the vehicle is turning;
FIG. 5 is a second diagram for explaining the cornering force and braking force generated at the wheels when braking a vehicle while the vehicle is turning;
FIG. 6 is a flowchart of an example of a control routine performed in a first embodiment of the present invention;
FIG. 7 shows a change in wheel cylinder pressure $P_{W/C}$ achieved by performing brake assist control when the vehicle is running straight in a first embodiment of the present invention;
FIG. 8 is a change in the wheel cylinder pressure $P_{W/C}$ achieved by performing brake assist control when the vehicle is turning in a first embodiment of the present invention;
FIG. 9 is a flowchart of an example of a control routine performed in a second embodiment of the present invention;
FIG. 10 is a change in a wheel cylinder pressure $P_{W/C}$ achieved by performing brake assist control when the vehicle is turning in a second embodiment of the present invention;
FIG. 11 is a diagram of a system structure of a brake force control apparatus according to a third embodiment of the present invention.

BEST MODE FOR CARRYING OUT THE INVENTION

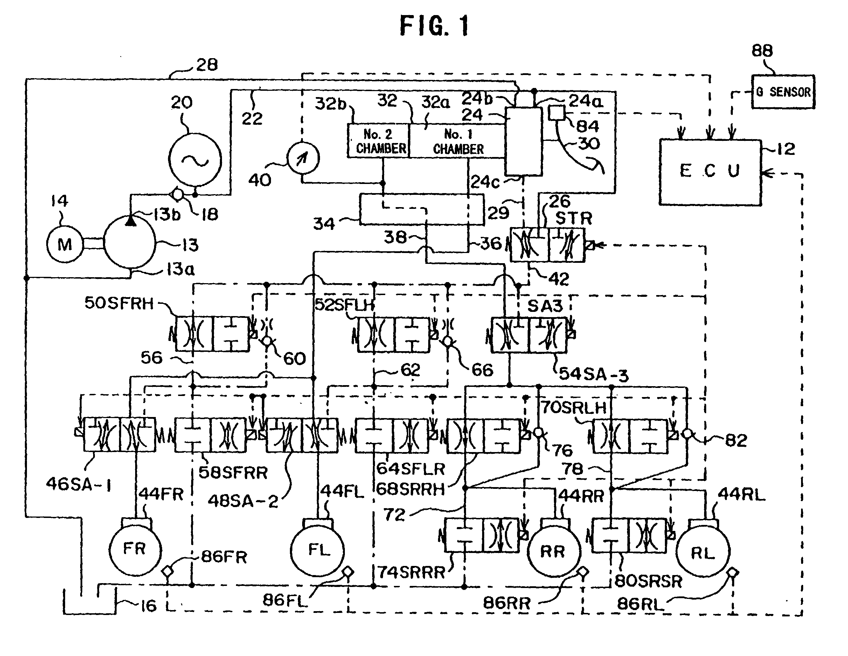

FIG. 1 is a diagram of a system structure of a first embodiment of the present invention. The brake force control apparatus shown in FIG. 1 is controlled by an electronic control unit 12 (hereinafter referred to as the ECU). The brake force control apparatus comprises a pump 13. The pump 13 has a motor 14 as a power source thereof. An inlet port 13a of the pump 13 communicates with a reservoir tank 16. In addition, an accumulator 20 communicates with an outlet port 13b of the pump 13 via a check valve 18. The pump 13 delivers brake fluid in the reservoir tank 16 from the outlet port 13b so that a predetermined fluid pressure is always accumulated inside the accumulator 20.

The accumulator 20 communicates with a high-pressure port 24a of a regulator 24 via a high-pressure passage 22 and communicates with a regulator switching solenoid 26 (hereinafter referred to as STR 26). The regulator 24 has a low-pressure port 24b that communicates with the reservoir tank 16 via a low-pressure passage 28 and a control fluid pressure port 24c that communicates with the STR 26 via a control fluid pressure passage 29. The STR 26 is a two-position electromagnetic valve that can be selectively positioned to so as to put either the control fluid pressure passage 29 or the high-pressure passage 22 in a conductive state. Normally, the STR 26 is in a state in which the control fluid pressure passage 29 is opened and the high-pressure passage 22 closed.

A brake pedal 30 is connected to the regulator 24 and a master cylinder 32 is fixedly mounted on the regulator 24. The regulator 24 has a fluid pressure chamber therein. The fluid pressure chamber always communicates with the control fluid pressure port 24c, and selectively communicates with the high-pressure port 24a or the low-pressure port 24b in accordance with an operational state of the brake pedal 30.

The brake pressing force $F_P$ exerted on the brake pedal 30 is mechanically transmitted to the master cylinder 32 via the regulator 24. Additionally, a force corresponding to the fluid pressure inside the fluid pressure chamber of the regulator 24, that is, a force corresponding to the regulator pressure $P_{RE}$, is transmitted to the master cylinder 32. Hereinafter, this force shall be referred to as the brake assist force $F_A$. Therefore, when the brake pedal 30 is pressed the combined force of the brake pressing force $F_P$ and brake assist force $F_A$ is communicated to the master cylinder 32.

The master cylinder 32 is provided with a first fluid pressure chamber 32a and a second fluid pressure chamber 32b therein. A master cylinder pressure $P_{M/C}$ corresponding to the combined force of the brake pressing force $F_P$ and the brake assist force $F_A$ is generated in the first fluid pressure chamber 32a and the second fluid pressure chamber 32b. Both the master cylinder pressure $P_{M/C}$ generated in the first fluid pressure chamber 32a and the master cylinder pressure $P_{M/C}$ generated in the second fluid pressure chamber 32b are supplied to a proportioning valve 34 (hereinafter, referred to as P valve 34).

The P valve 34 communicates with a first fluid pressure passage 36 and a second fluid pressure passage 38. The P valve 34 supplies the master cylinder pressure $P_{M/C}$ to the first fluid pressure passage 36 and the second fluid pressure passage 38 without change in a range where the master cylinder pressure $P_{M/C}$ is less than a predetermined value. Additionally, the P valve 34 supplies the master cylinder pressure $P_{M/C}$ to the first fluid pressure passage 36 without change and supplies a fluid pressure obtained by decreasing the master cylinder pressure $P_{M/C}$ by a predetermined ratio to the second fluid pressure passage 38 in a range where the master cylinder pressure $P_{M/C}$ exceeds a predetermined value.

A hydraulic pressure sensor 40, which outputs an electrical signal proportionate to the master cylinder pressure $P_{M/C}$, is provided on the second fluid pressure passage 38. Output signals of the hydraulic pressure sensor 40 are supplied to the ECU 12. The ECU 12 detects the master cylinder pressure $P_{M/C}$ generated in the master cylinder 32 based on the output signal of the hydraulic pressure sensor 40.

The above-mentioned STR 26 communicates with a third fluid pressure passage 42. The third fluid pressure passage 42 communicates with one of either the control fluid pressure passage 29 or the high-pressure passage 22 depending on a state of the STR 26. In the present embodiment, wheel cylinders 44FL and 44FR provided to left and right front wheels FL and FR are provided with brake fluid pressure from the first fluid pressure passage 36 communicating with the P valve 34 or from the third fluid pressure passage 42 communicating with the STR 26. Additionally, wheel cylinders 44RL and 44RR provided to left and right rear wheels RL and RR are provided with brake fluid pressure from the second fluid pressure passage 38 communicating with the P valve 34 or from the third fluid pressure passage 42 communicating with the STR 26.

The first fluid pressure passage 36 communicates with a first assist solenoid valve 46 (hereinafter referred to as $SA_{-1}$ 46) and a second assist solenoid valve 48 (hereinafter, referred to as $SA_{-2}$). On the other hand, the third fluid pressure passage 42 communicates with a right front wheel holding solenoid valve 50 (hereinafter, referred to as SFRH 50), a left front wheel holding solenoid valve 52 (hereinafter, referred to as SFLH 52) and a third assist solenoid valve 54 (hereinafter, referred to as $SA_{-3}$ 54).

The SFRH 50 is a two-position solenoid valve which normally remains in an open state. The SFRH 50 communicates with the $SA_{-1}$ 46 and a right front wheel pressure decreasing solenoid valve 58 (hereinafter, referred to as SFRR 58) via a pressure adjusting fluid pressure passage 56. A check valve 60 permitting a fluid flow only in a direction from the pressure adjusting fluid pressure passage 56 to the third fluid pressure passage 42 is provided, in parallel, between the third fluid pressure passage 42 and the pressure adjusting fluid pressure passage 56.

The $SA_{-1}$ 46 is a two-position solenoid valve which selectively connects one of either the first fluid pressure passage 36 or the pressure adjusting fluid pressure passage 56 to the wheel cylinder 44FR, and in a normal state (OFF state) connects the first fluid pressure passage 36 to the wheel cylinder 44FR. On the other hand, the SFRR 58 is a two-position solenoid valve which connects or disconnects the pressure adjusting fluid pressure passage 56 and the reservoir tank 16. In a normal state (OFF state), the SFRR 58 renders the pressure adjusting fluid pressure passage 56 and the reservoir tank 16 to be in a disconnected state.

The SFLH 52 is a two-position solenoid valve which normally remains in an open state. The SFLH 52 communicates with the $SA_{-2}$ 48 and a left front wheel pressure decreasing solenoid valve 64 (hereinafter, referred to as SFLR 64) via a pressure adjusting fluid pressure passage 62. A check valve 66 permitting a fluid flow only in a direction from the pressure adjusting fluid pressure passage 62 to the third fluid pressure passage 42 is provided, in parallel, between the third fluid pressure passage 42 and the pressure adjusting fluid pressure passage 62.

The $SA_{-2}$ 48 is a two-position solenoid valve which selectively renders one of the first fluid pressure passage 36 and the pressure adjusting fluid pressure passage 62 to be communicated with the wheel cylinder 44FL, and in a normal state (OFF state) renders the first fluid pressure passage 36 and the wheel cylinder 44FL to be in a communicating state. On the other hand, the SFLR 64 is a two-position solenoid valve which renders the pressure adjusting fluid pressure passage 62 and the reservoir tank 16 to be in a connected state or a disconnected state. In a normal state (OFF state), the SFLR 64 renders the pressure adjusting fluid pressure passage 62 and the reservoir tank 16 to be in a disconnected state from each other.

The second fluid pressure passage 38 communicates with the above-mentioned $SA_{-3}$ 54. The downstream side of the $SA_{-3}$ 54 communicates with a right rear wheel holding solenoid valve 68 (hereinafter, referred to as SRRH 68) provided in correspondence with a wheel cylinder 44RR of the right rear wheel RR and a left rear wheel holding solenoid valve 70 (hereinafter, referred to as SRLR 70) provided in correspondence with a wheel cylinder 44RL of the left rear wheel RL. The $SA_{-3}$ 54 is a two-position solenoid valve which selectively renders one of either the second fluid pressure passage 38 or the third fluid pressure passage 42 to be communicated with the SRRH 68 and the SRLR 70, and in a normal state (OFF state) renders the second fluid pressure passage 38, the SRRH 68 and the SRLR 70 in a communicating state.

The downstream side of the SRRH 68 communicates with the wheel cylinder 44RR and a right rear wheel pressure decreasing solenoid valve 74 (hereinafter, referred to as SRRR 74) via a pressure adjusting fluid pressure passage 72. The SRRR 74 is a two-position solenoid valve which renders the pressure adjusting fluid pressure passage 72 and the reservoir tank 16 in a communicating state or a disconnected state, and in a normal state (OFF state) renders the pressure adjusting fluid pressure passage 72 and the reservoir tank 16 in the disconnected state. Additionally, a check valve 76 permitting a fluid flow only in a direction from the pressure adjusting fluid pressure passage 72 to the $SA_{-3}$ 54 is provided, in parallel, between the $SA_{-3}$ 54 and the pressure adjusting fluid pressure passage 72.

Similarly, the downstream side of the SRLH 70 communicates with the wheel cylinder 44RL and a left rear wheel pressure decreasing solenoid valve 80 (hereinafter, referred to as SRLR 80) via a pressure adjusting fluid pressure passage 78. The SRLR 80 is a two-position solenoid valve which renders the pressure adjusting fluid pressure passage 78 and the reservoir tank 16 in a communicating state or a disconnected state, and in a normal state (OFF state) renders the pressure adjusting fluid pressure passage 78 and the reservoir tank 16 in the disconnected state. Additionally, a check valve 82 permitting a fluid flow only in a direction from the pressure adjusting fluid pressure passage 78 to the $SA_{-3}$ 54 is provided, in parallel, between the $SA_{-3}$ 54 and the pressure adjusting fluid pressure passage 78.

In the system according to the present embodiment, a brake switch 84 is provided near the brake pedal 30. The brake switch 84 is a switch that generates an ON output when the brake pedal 30 is pressed. The output signal of the brake switch 84 is supplied to the ECU 12. The ECU 12 determines whether or not a braking operation is being performed by the driver based on the output signal of the brake switch 84.

In the system according to the present embodiment, wheel speed sensors 86FL, 86FR, 86RL and 86RR (hereinafter referred to collectively as 86**) are provided near the left and right front wheels FL and FR and the left and right rear wheels RL and RR, each of the sensors generating a pulse signal when the respective wheel rotates a predetermined rotation angle. The output signals of the wheel speed sensors 86** are supplied to the ECU 12. Based on the output signals of the wheel speed sensors 86** the ECU 12 detects a rotation speed of each of the wheels FL, FR, RL and RR, in other words a wheel speed of each of the wheels FL, FR, RL and RR.

Additionally, in the system according to the present embodiment an acceleration sensor 88 is connected to the ECU 12. The acceleration sensor 88 outputs signals that correspond to the acceleration exerted on the vehicle in the lateral direction (hereinafter referred to as lateral acceleration Gy). The ECU 12 detects the turning condition of the vehicle based on the output signals of the acceleration sensor 88.

The ECU supplies drive signals as appropriate to the above-mentioned STR 26, $SA_{-1}$ 46, $SA_{-2}$ 48, $SA_{-3}$ 54, SFRH 50, SFLH 52, SFRR 58, SFLR 64, SRRH 68, SRLH 70, SRRR 74 and SRLR 80 based on the output signals of the brake switch 84.

A description will now be given of an operation of the brake force control apparatus according to the present embodiment. The brake force control apparatus according to the present embodiment performs normal control for generating a brake force corresponding to the brake pressing force $F_P$ exerted on the brake pedal 30 when the vehicle is in a stable state. As shown in FIG. 1, normal control can be achieved by turning OFF all of STR 26, $SA_{-1}$ 46, $SA_{-2}$ 48, $SA_{-3}$ 54, SFRH 50, SFLH 52, SFRR 58, SFLR 64, SRRH 68, SRLH 70, SRRR 74 and SRLR 80.

That is, in the state shown in FIG. 1, the wheel cylinders 44FR and 44FL communicate with the first fluid pressure passage 36, and the wheel cylinders 44RR and 44RL communicate with the second fluid pressure passage 38, respectively. In this case, the brake fluid flows between the master cylinder 32 and the wheel cylinders 44FR, 44FL, 44RL and 44RR (hereinafter referred to collectively as 44**), and a brake force corresponding to the brake pressing force $F_P$ is generated at each of the wheels FL, FR, RL and RR.

In the present embodiment, when a possibility for shifting to a locked state is detected in one of the wheels, it is determined that a condition for performing an antilock brake control (hereinafter, referred to as ABS control) is established and thereafter ABS control is commenced. The ECU 12 calculates wheel speeds $V_{WFL}$, $V_{WFR}$, $V_{WRL}$ and $V_{WRR}$ (hereinafter referred to collectively as Vw**) of each of the wheels based on output signals of the wheel speed sensors 86**, and based on these wheel speeds Vw** calculates an assumed value $V_{SO}$ (hereinafter referred to as an assumed vehicle speed $V_{SO}$) of a speed of the vehicle according to a commonly known method. Then, when the vehicle is in a braking state, a slip rate S of each wheel is calculated according to the following equation so as to determine that the wheel may shift to a locked state when the slip rate S exceeds a predetermined value.

$$S = (V_{SO} - V_W \cdot\cdot)\cdot 100/V_{SO} \qquad (1)$$

When it is determined that conditions for performing ABS control are established for the right front wheel FR, the ECU 12 outputs drive signals to the $SA_{-1}$ 46. Additionally, when it is determined that conditions for performing ABS control are established for the left front wheel FR the ECU 12 outputs drive signals to the $SA_{-2}$ 48. Then, when it is determined that conditions for performing ABS control are established for either the left rear wheel RL or right rear wheel RR the ECU 12 outputs drive signals to the $SA_{-3}$ 54.

When the $SA_{-1}$ 46 is turned on, the wheel cylinder 44FR is disconnected from the first fluid pressure passage 36 and connected to the pressure adjusting fluid pressure passage 56. Additionally, when the $SA_{-2}$ 48 is turned on, the wheel cylinder 44FL is disconnected from the first fluid pressure passage 36 and connected to the pressure adjusting fluid pressure passage 62. Further, when the $SA_{-3}$ 54 is turned on, the SRRH 68 and the SRLH 70 are disconnected from the second fluid pressure passage 38 and connected to the third fluid pressure passage 42.

When as described above $SA_{-1}$ 46, $SA_{-2}$ 48 and $SA_{-3}$ 54 are turned on, wheel cylinders 44** communicate with respective holding solenoid valves SFRH 50, SFLH 52, SRRH 68 and SRLH 70 (hereinafter referred to collectively as holding solenoid S**H) and respective pressure decreasing solenoid valves SFRR 58, SFLR 64, SRRR 74 and SRLR 80 (hereinafter referred to collectively as pressure decreasing solenoid S**R), and a regulator pressure $P_{RE}$ is introduced to each of the holding solenoids S**H via the third fluid pressure passage 42 and the STR 26.

Under the conditions described above, when the holding solenoids S**H are in an open state and the pressure decreasing solenoids S**R are in a closed state the wheel cylinder pressure $P_{W/C}$ corresponding to wheel cylinders 44** is increased with the regulator pressure $P_{RE}$ as an upper limit. Hereinafter, this state is referred to as a pressure increasing mode ①. Additionally, under the conditions described above, when the holding solenoids S**H is in a closed state and the pressure decreasing solenoids S**R is in a closed state the wheel cylinder pressure $P_{W/C}$ of the respective wheel cylinders 44** is maintained without being increased or decreased. Hereinafter, this state is referred to as a holding mode ②. Further, under the conditions described above, when the holding solenoids S**H are in a closed state and the pressure decreasing solenoids S**R are in an open state the wheel cylinder pressure $P_{W/C}$ of the respective wheel cylinders 44** is decreased. Hereinafter, this state is referred to as a pressure decreasing mode ③.

The ECU 12 achieves as appropriate the above-mentioned pressure increasing mode ①, holding mode ② and pressure decreasing mode ③ so that a slip rate S of each wheel during a braking time is held to an appropriate value, that is, so that each wheel does not shift to a locked state.

The wheel cylinder pressure $P_{W/C}$ must be immediately decreased after the brake pedal 30 is released by the driver during execution of ABS control. In the system according to the present embodiment, the check valves 60, 66, 76 and 82 are provided in hydraulic pressure paths corresponding to each of the wheel cylinders 44** to permit fluid flow only in the directions from the wheel cylinders 44** to the third fluid pressure passage 42. Thus, according to the system of the present embodiment, after the brake pedal 30 is released the wheel cylinder pressures $P_{W/C}$ of all of the wheel cylinders 44** can be immediately decreased.

In the system according to the present embodiment, when the ABS control is performed, the wheel cylinder pressure $P_{W/C}$ is increased by the brake fluid being supplied from the regulator 24 to the wheel cylinders 44**, that is, by the brake fluid being supplied from the pump 12 to the wheel cylinders 44**, and is decreased by the brake fluid in the wheel cylinders 44** flowing to the reservoir tank 16. When the increase in the wheel cylinder pressure $P_{W/C}$ is performed by using the master cylinder 32 as a fluid pressure source and if the pressure increasing mode and the pressure decreasing mode are repeatedly performed, the brake fluid in the master cylinder 32 gradually decreases and a so-called bottoming of the master cylinder may occur.

On the other hand, if the pump 12 is used as a fluid pressure source so as to increase the wheel cylinder pressure $P_{W/C}$ as in the system according to the present embodiment, such a bottoming can be prevented. Thus, in the system according to the present embodiment, a stable operational state can be maintained if the ABS control is continued for an extended period of time.

In the system according to the present embodiment, ABS control is commenced when a possibility for shifting to a locked state is detected in one of the wheels. Accordingly, as a precondition for commencing ABS control a braking operation of a degree to generate a large slip rate S in one of the wheels must be performed.

If the driver of the vehicle is a highly skilled driver, then after the occurrence of a condition requiring emergency braking the brake pressing force $F_P$ can be immediately increased swiftly and a large brake pressing force $F_P$ can be maintained for an extended period of time. If such brake pressing force $F_P$ is exerted upon the brake pedal 30, then a sufficiently high brake fluid pressure can be supplied to the wheel cylinders 44** from the master cylinder 32 and ABS control can be commenced.

However, if the driver of the vehicle is inexperienced then it is sometimes the case that the brake pressing force $F_P$ is not raised to a sufficiently high value after the occurrence of a condition requiring emergency braking. If the brake pressing force $F_P$ exerted upon the brake pedal 30 is not sufficiently increased after emergency braking is required, then there is a possibility that the wheel cylinder pressure $P_{W/C}$ of the wheel cylinders 44** will not be sufficiently increased and ABS control will not be commenced.

Thus, despite the fact that the vehicle itself has excellent braking ability it sometimes happens that, when the driver is inexperienced, this ability is not fully actualized even during emergency braking. Accordingly, the system according to the present embodiment performs control to forcibly increase the wheel cylinder pressure $P_{W/C}$ when the brake pedal 30 is operated with the intention of performing emergency braking but where the brake pressing force $F_P$ is not increased sufficiently. Hereinafter, this control is referred to as brake assist control (BA control). In the system according to the present invention, when a brake pressing force $F_P$ is applied to the brake pedal, a master cylinder pressure $P_{M/C}$ corresponding to the brake pressing force $F_P$ is generated at the master cylinder 32. The master cylinder pressure $P_{M/C}$ changes slowly when normal braking is performed as compared to when braking with the intention of performing emergency braking is performed. Additionally, a convergent value of the master cylinder pressure $P_{M/C}$ generated in association with normal braking is not as large as a convergent value of the master cylinder pressure $P_{M/C}$ generated in association with braking with the intention of performing emergency braking.

For this reason, when the master cylinder pressure $P_{M/C}$ detected by the hydraulic sensor 40 is increased both at a rate of change exceeding a predetermined value and to a sufficiently large value after braking has commenced, it can be determined that braking with the intention of performing emergency braking has been performed. Additionally, when the rate of change of the master cylinder pressure $P_{M/C}$ is smaller than a predetermined value or when the convergent value of the master cylinder pressure $P_{M/C}$ does not attain a predetermined value after braking has commenced, it can be determined that braking with the intention of performing normal braking has been performed.

According to the present embodiment, BA control operation is commenced when the master cylinder pressure $P_{M/C}$ detected by the hydraulic pressure sensor 40 (hereinafter that value is referred to as the detected value $SP_{M/C}$) as well as its rate of change satisfy predetermined emergency braking conditions but the detected value $SP_{M/C}$ has not been increased sufficiently (hereinafter these conditions are referred to as BA control performance conditions).

A description will now be given of an operation of the system according to the present embodiment with respect to the BA control operation. When a braking operation that satisfies the conditions for emergency braking is performed by the driver, it is determined at the ECU 12 that conditions have been achieved for performing BA control. The ECU 12, after determining that BA control performance conditions have been established, determines whether or not conditions have been formed in which it would be advantageous to the swift increase of the wheel cylinder pressure $P_{W/C}$ to use the accumulator 20 rather than the master cylinder pressure $P_{M/C}$ as the sources of fluid pressure. As a result, when conditions are formed in which it would be advantageous to use the accumulator 20 as the fluid pressure source it is determined at the ECU 12 that the time to commence BA control has arrived.

When the ECU 12 has determined that the time has arrived to commence BA control it outputs drive signals to the STR 26, the $SA_{-1}$ 46, the $SA_{-2}$ 48 and the $SA_{-3}$ 54. When the STR 26 is turned on upon receipt of the above-mentioned drive signal, the third fluid pressure passage 42 and the high-pressure passage 22 are directly connected to each other. In this case, an accumulator pressure $P_{ACC}$ is introduced into the third fluid pressure passage 42. Additionally, when the $SA_{-1}$ 46 and the $SA_{-2}$ 48 are turned ON upon receipt of the drive signals, the wheel cylinders 44FR and 44FL communicate with the pressure adjusting fluid pressure passages 56 and 62, respectively. Further, when the $SA_{-3}$ 54 is turned ON upon receipt of the above-mentioned drive signal, the upstream side of the SRRH 68 and SRLH 70 communicates with the third fluid pressure passage 42. In this case, a state is established in which all of the wheel cylinders 44** communicate with the respective holding solenoids S**H and the respective pressure decreasing solenoids S**R and the accumulator pressure $P_{ACC}$ is introduced to the upstream side of each of the holding solenoids S**H.

If neither ABS control nor any other brake force control is being performed at the point in time at which it is determined that the time has arrived to commence BA control, then at that point in time all the holding solenoids S**H as well as all the pressure decreasing solenoids S**R are maintained in the OFF state. Accordingly, as described above, when the accumulator pressure $P_{ACC}$ is introduced to the upstream side of the holding solenoids S\*\*H, the fluid pressure is provided to the wheel cylinders 44\*\* without being changed. As a result, the wheel cylinder pressure $P_{W/C}$ of all of the wheel cylinders 44\*\* is increased toward the accumulator pressure $P_{ACC}$.

In this manner, according to the system of the present embodiment, when emergency braking has been performed the wheel cylinder pressure $P_{W/C}$ of all of the wheel cylinders 44\*\* can be immediately increased irrespective of a magnitude of the brake pressing force $F_P$. Thus, according to the system of the present embodiment, a large brake force can be generated immediately after establishment of a condition in which emergency braking is required, even if the driver is inexperienced.

When BA control is commenced as mentioned above by execution of an emergency braking operation, the BA control must be ended when the brake pedal 30 is released. In the system according to the present invention, as mentioned above the STR 26, the SA$_{-1}$ 46, the SA$_{-2}$ 48 and the SA$_{-3}$ 54 are maintained in the ON state during BA control. When the STR 26, the SA$_{-1}$ 46, the SA$_{-2}$ 48 and the SA$_{-3}$ 54 are in the ON state, each of the fluid pressure chamber in the regulator 24 as well as the first fluid pressure chamber 32a and the second fluid pressure chamber 32b provided on the master cylinder 32 form a substantially closed space.

In such a state, the master cylinder pressure $P_{M/C}$ assumes a value corresponding to the brake pressing force $F_P$. Accordingly, by monitoring the output signal of the master cylinder pressure $P_{M/C}$ detected by the hydraulic pressure sensor 40 the ECU 12 can easily determine whether or not the brake pedal 30 has been released. When release of the brake pedal 30 is detected the ECU 12 stops the supply of drive signals to the STR 26, the SA$_{-1}$ 46, the SA$_{-2}$ 48 and the SA$_{-3}$ 54 so as to return the brake force control apparatus to a state in which normal control is performed. In this manner, according to the system of the present embodiment, BA control can with certainty be terminated together with the end of a braking operation.

When the accumulator pressure $P_{ACC}$ begins to be supplied to the wheel cylinders 44\*\* as mentioned above, a slip rate S of each of the wheels FL, FR, RL and RR is rapidly increased, and conditions for performing ABS control are finally established. When the condition for performing the ABS control is established, the ECU 12 achieves, if necessary, the above-mentioned pressure increasing mode ①, holding mode ② and pressure decreasing mode ③ so that the slip rate S of each of the wheels is held to an appropriate value, that is, so that each of the wheels does not shift to a locked state.

It should be noted that when the ABS control is performed after BA control is commenced, the wheel cylinder pressure $P_{W/C}$ is increased by the supply of brake fluid to the wheel cylinders 44\*\* from the pump 13 and the accumulator 20, and is decreased by the flow of brake fluid in the wheel cylinders 44\*\* to the reservoir tank 16. Accordingly, even if the pressure increasing mode and the pressure decreasing mode are repeated, a so-called bottoming of the master cylinder 32 does not occur.

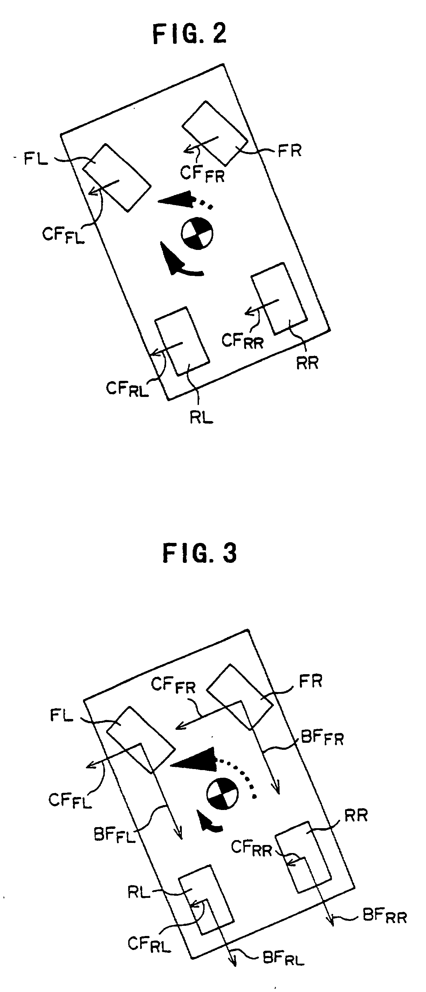

A description will now be given of the distinctive portions of the brake force control apparatus of the present embodiment with reference to FIG. 2 through FIG. 8. FIG. 2 shows cornering forces $CF_{FL}$, $CF_{FR}$, $CF_{RL}$ and $CF_{RR}$ (hereinafter referred to collectively as cornering forces CF\*\*) generated at each of four wheels FL, FR, RL and RR, respectively, of a vehicle in a turn.

If a vehicle in a turn is neither accelerated nor decelerated, then only a frictional force toward the inside of the direction of the turn is generated. In this case, as shown in FIG. 2 the frictional forces generated at each of the wheels FL, FR, RL and RR all become cornering forces CF\*\*.

Of the cornering forces CF\*\* generated at the four wheels of the vehicle FL, FR, RL and RR, cornering forces $CF_{FL}$ and $CF_{FR}$ generated at the front left wheel FL and front right wheel FR are moments that try to rotate the vehicle in the direction of the turn around the center of gravity G, that is, are exerted upon the vehicle as spin moments. On the other hand, of the cornering forces CF\*\* generated at the four wheels of the vehicle FL, FR, RL AND RR, cornering forces $CF_{RL}$ and $CF_{RR}$ generated at the rear left wheel RL and rear right wheel RR are moments that try to rotate the vehicle in the opposite direction of the turn around the center of gravity G, that is, are exerted upon the vehicle as anti-spin moments.

When a spin moment is generated that is large compared to the anti-spin moment during a turn, the vehicle changes its stance further toward the inside of the turn. On the other hand, when an anti-spin moment is generated that is large compared to the spin moment during a turn, the vehicle changes its stance further toward the outside of the turn. Accordingly, the stance of the vehicle during a turn changes depending on the balance between the cornering forces $CF_{FL}$ and $CF_{FR}$ generated at the front left wheel FL and front right wheel FR and the cornering forces $CF_{RL}$ and $CF_{RR}$ generated at the rear left wheel RL and rear right wheel RR.

FIG. 3 shows cornering forces CF\*\* generated at each of four wheels FL, FR, RL and RR, respectively, as well as brake force $BF_{FL}$, $BF_{FR}$, $BF_{RL}$ and $BF_{RR}$ (hereinafter referred to collectively as brake forces BF\*\*) generated at each of four wheels FL, FR, RL and RR, respectively, of a vehicle braked when in a turn.

When an automobile is braked, the load of the vehicle shifts toward the front. When the load of the vehicle shifts toward the front the frictional circle of the front wheels FL and FR increases and the frictional circle of the rear wheels RL and RR decreases. Thus, during braking of the vehicle the combined frictional force that can be generated at the front wheels FL and FR increases but the combined frictional force that can be generated at the rear wheels RL and RR decreases.

When an automobile is braked during a turn, a combined frictional force combining the cornering forces CF** and the brake forces FB** is generated at the four wheels FL, FR, RL and RR. At this point, at the front wheels FL and FR a large frictional circle is secured, so sufficiently large cornering forces $CF_{FL}$ and $CF_{FR}$ can be obtained. At the same time, the frictional circle at the rear wheels RL and RR is small, so it becomes difficult to obtain large cornering forces $CF_{RL}$ and $CF_{RR}$. Thus, when braking is performed while the vehicle is in a turn it is easy for the spin moment to increase and the anti-spin moment to decrease.

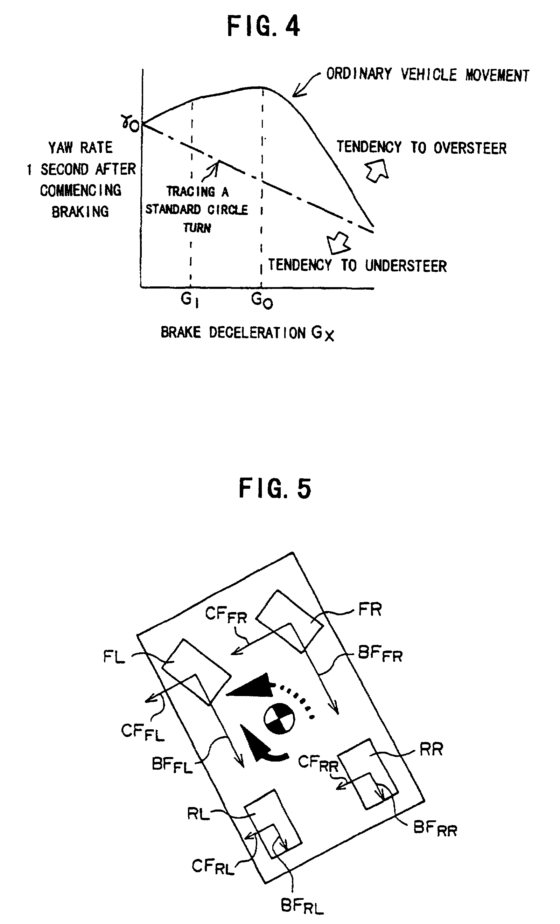

FIG. 4 is a diagram of characteristics expressed as a relation between a size of a yaw rate $\gamma$ generated 1 second after a braking operation is performed in a vehicle turning at a yaw rate $\gamma_0$ and a brake deceleration Gx exerted upon the vehicle in association with the braking. It should be noted that the dot-and-dash straight line in FIG. 4 is achieved when handling characteristics remain constantly neutral for all brake decelerations Gx exerted on the vehicle.

As described above, when braking is performed while the vehicle is in a turn it is easy for the spin moment to increase and the anti-spin moment to decrease. Accordingly, when the brake deceleration Gx exerted on the vehicle is at or below a predetermined value $G_0$, the larger the brake deceleration Gx exerted on the vehicle the easier it is for the yaw rate $\gamma$ to increase after braking is commenced, that is, the easier it is for the vehicle to tend to oversteer.

It should be noted that in the region where the brake deceleration Gx exerted on the vehicle exceeds a predetermined value $G_0$ it becomes impossible to secure large cornering forces $CF_{FL}$ and $CF_{FR}$ at not only the rear wheels RL and RR but also at the front wheels FL and FR. Accordingly, in the region in which such brake deceleration Gx is exerted, the larger the brake deceleration Gx the more difficult for the yaw rate $\gamma$ to increase after braking has commenced, that is, the easier it is for the vehicle handling to display neutral characteristics.

In the brake force control apparatus of the present embodiment, when BA control is performed the wheel cylinder pressure $P_{W/C}$ of the four wheel cylinders 44** is suddenly increased to a large value. Accordingly, when BA control has been performed, despite the fact that a brake deceleration Gx corresponding to a brake pressing force $F_P$ is of a level expressed for example in FIG. 4 as $G_1$, in fact it is possible that a brake deceleration of a level expressed for example in FIG. 4 as $G_0$ is generated.

If the driver of the vehicle is anticipating a brake deceleration of the level of $G_1$, then the driver is expecting a tendency to oversteer to a level corresponding to that $G_1$. Accordingly, when a $G_0$ that is large com-

pared to $G_1$ is generated and the vehicle begins to oversteer to a degree corresponding to brake deceleration $G_0$ as a result, the driver is given the incongruous feeling that the vehicle handling characteristics have changed suddenly.

FIG. 5 shows cornering forces CF** and brake forces BF** achieved when a large brake fluid pressure has been supplied to front wheel cylinders 44FL and 44FR of front wheels FL and FR and a small brake fluid pressure has been supplied to wheel cylinders 44RL and 44RR of the rear wheels RL and RR when braking a vehicle while the vehicle is turning.

In the generation of brake deceleration Gx, when a large brake fluid pressure is supplied to wheel cylinders 44FL and 44FR of front wheels FL and FR, large cornering forces $CF_{FL}$ and $CF_{FR}$ and large brake forces $BF_{FL}$ and $BF_{FR}$ can be generated at front wheels FL and FR. Additionally, in the generation of brake deceleration Gx, when a small brake fluid pressure is supplied to wheel cylinders 44RL and 44RR of rear wheels RL and RR, the front and rear direction components of a combined frictional force generated at rear wheels RL and RR can be minimized. Thus, under such conditions it is possible to generate large cornering forces $CF_{FL}$ and $CF_{FR}$.

Accordingly, when BA control is performed when the vehicle is in a turn and a large brake fluid pressure is supplied to wheel cylinders 44FL and 44FR of front wheels FL and FR as described above and a small brake fluid pressure has been supplied to wheel cylinders 44RL and 44RR of the rear wheels RL and RR, change in the handling characteristics attendant upon performance of BA control can be minimized. The brake force control apparatus of the present embodiment is characterized in that it achieves the function described above.

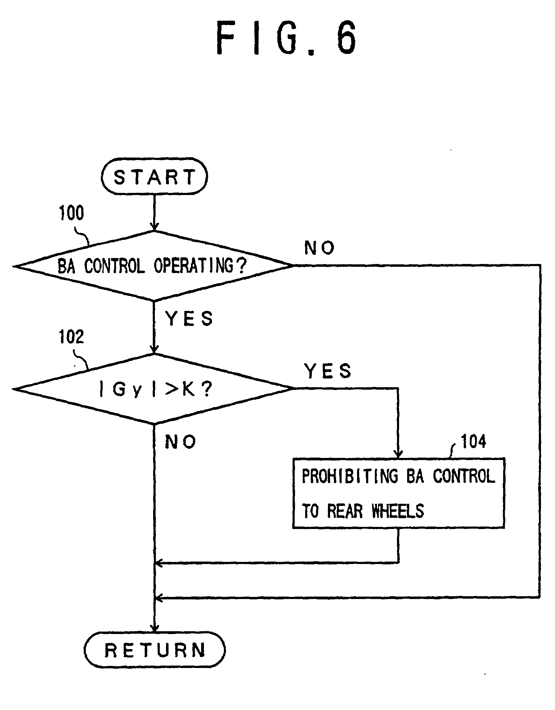

FIG. 6 shows a flowchart of an example of a control routine the ECU 12 performs so as to achieve the function described above. The routine shown in FIG. 6 is a timed interruption routine started every predetermined time period. When the routine shown in FIG. 6 is started the process of a step 100 is performed first.

In step 100, it is determined whether or not BA control is being performed. In the system of the present embodiment, the STR 26 is always in an ON state while BA control is being performed. In the present step 100, it is determined that BA control is being performed whenever the STR is in an ON state. When such a determination has been made, the process of a step 102 is performed next. On the other hand, whenever it is determined that the STR 26 is not in an ON state the current routine is terminated without thereafter proceeding with any other process.

In step 102, it is determined whether or not an absolute value |Gy| of a lateral acceleration Gy detected by an acceleration sensor 88 exceeds a predetermined value K. The value |Gy| increases as the turn of the vehicle becomes sharper. Thus, |Gy| can be treated as a characteristic value that corresponds to the degree of the turn of the vehicle. If it is determined in the present step 102 that |Gy| is greater than K and BA control is performed by a common method, then it can be determined that the vehicle handling characteristics exceed the driver's expectations and develop a tendency to oversteer. In this case, the process of a step 104 is performed after the process of the present step 102. On the other hand, if it is determined that Gy| is not greater than K, then it can be determined that even if BA control is performed by a known method the vehicle handling characteristics will not change unjustifiably. In this case, when the process of the present step 104 ends the current routine is terminated without thereafter proceeding with any other process.

In step 104, the process of prohibiting the supply of accumulator pressure $P_{ACC}$ to the rear wheels RL and RR attendant upon the performance of BA control is performed. Specifically, in the present step the $SA_{-3}$54 is prohibited from entering an ON state. Normally, when performance conditions have been established for BA control, drive signals are supplied to the $SA_{-3}$ as described above. By contrast, when the process of the present step 104 is performed drive signals are not thereafter supplied to the $SA_{-3}$.

When no drive signals are supplied to the $SA_{-3}$, the wheel cylinders 44RL and 44RR of the rear wheels RL and RR are always in a state in which they are connected to the master cylinder 32 via the SRLH70 and the SRRH68. Accordingly, when the process of step 104 described above is performed the wheel cylinders 44RL and 44RR of the rear wheels RL and RR are maintained in a state in which they are connected to the master cylinder 32 even during performance of BA control.

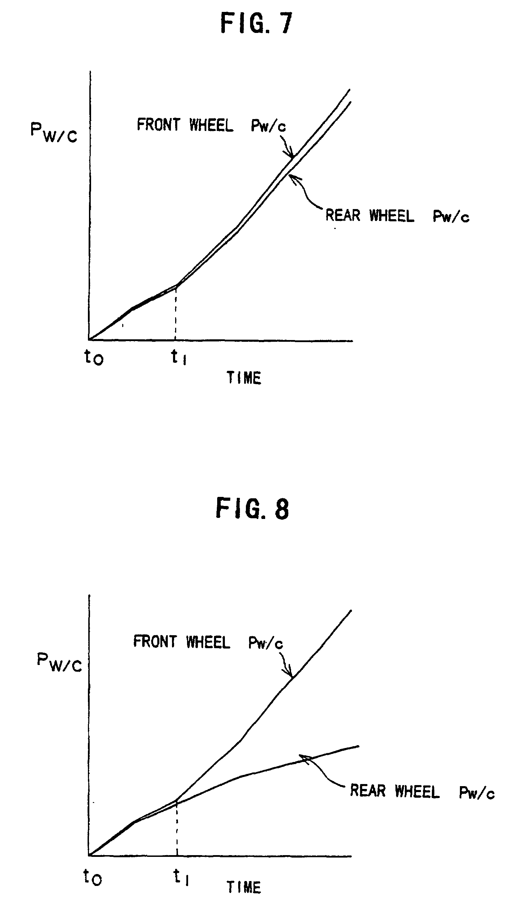

FIG. 7 shows a change in wheel cylinder pressure $P_{W/C}$ at the front wheels FL and FR as well as the rear wheels RL and RR achieved with a vehicle mounting the brake force control apparatus of the present embodiment when the vehicle is running straight. The change in wheel cylinder pressure $P_{W/C}$ shown in FIG. 7 is that which is achieved under conditions in which the vehicle is running straight, an emergency braking operation is commenced at a time $t_0$ and it is determined at a time $t_1$ that the time has arrived to commence BA control. As is shown in FIG. 7, when the vehicle is running straight, the wheel cylinder pressure $P_{W/C}$ at the front wheels FL and FR and the wheel cylinder pressure $P_{W/C}$ at the rear wheels RL and RR are after time $t_1$ raised suddenly to a large fluid pressure at virtually the same rate of increase.

FIG. 8 shows a change in wheel cylinder pressure $P_{W/C}$ at the front wheels FL and FR as well as the rear wheels RL and RR achieved with a vehicle mounting the brake force control apparatus of the present embodiment when the vehicle is in a predetermined turn. The change in wheel cylinder pressure $P_{W/C}$ shown in FIG. 8 is that which is achieved under conditions in which the vehicle is running straight, an emergency braking operation is commenced at a time $t_0$ and it is determined at a time $t_1$ that the time has arrived to commence BA control. As is shown in FIG. 8, when the vehicle is in a turn, the wheel cylinder pressure $P_{W/C}$ at the front wheels FL and FR is after time $t_1$ raised suddenly to a large fluid pressure. On the other hand, the wheel cylinder pressure $P_{W/C}$ at the rear wheels RL and RR after time $t_1$ is raised relatively slowly. Thus, according to the brake force control apparatus of the present embodiment, when emergency braking is performed while the vehicle is turning a large brake force can be generated without tending to make the *vehicle greatly oversteer.*

In the embodiment described above, the lateral acceleration Gy detected by the acceleration sensor 88 is used as the characteristic value that corresponds to the vehicle turn condition. However, the characteristic value that corresponds to the vehicle turn condition is not limited to the lateral acceleration Gy. That is, a formula like (2) is known for expressing the lateral acceleration Gy using, for example, an estimated vehicle speed $V_{SO}$, a turning outer radius $V_{WO}$, a turning inner radius $V_{WO}$ and a vehicle tread D. When estimating the lateral acceleration Gy according to the formula (2) below, it is possible to use that estimated value Gy as the characteristic value expressing the vehicle turn condition.

$$Gy = \{V_{SO} \times (V_{WO} - V_{WI})\}/d \qquad (2)$$

Further, the turn condition of the vehicle can also be understood for example by a yaw rate γ around a center of gravity G. Accordingly, when a yaw rate sensor is provided it is also possible to use that detected value as the characteristic value expressing the vehicle turn condition.

It should be noted that in the embodiment described above, the "turn condition detecting means" described in Claim 1 is achieved by the ECU 12 reading the detected value of the acceleration sensor 88; at the same time, the "rear wheel brake force suppressing means" described in Claim 1 and the "assist prohibiting means" described in Claim 3 are achieved by the ECU 12 performing the processes of step 102 and step 104 described above.

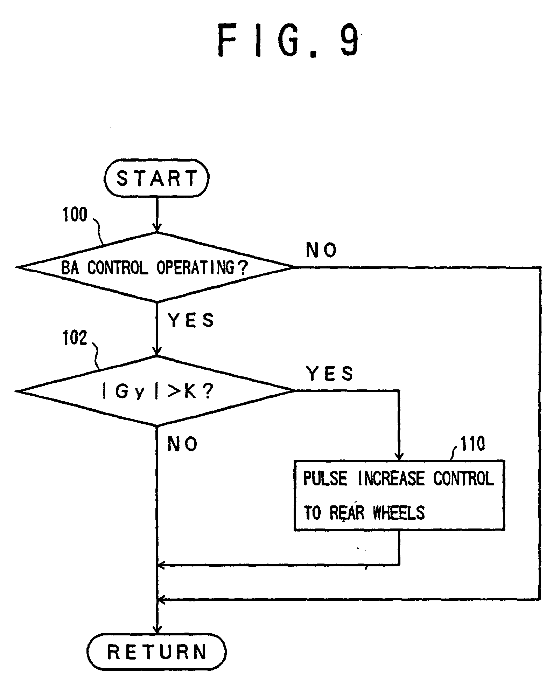

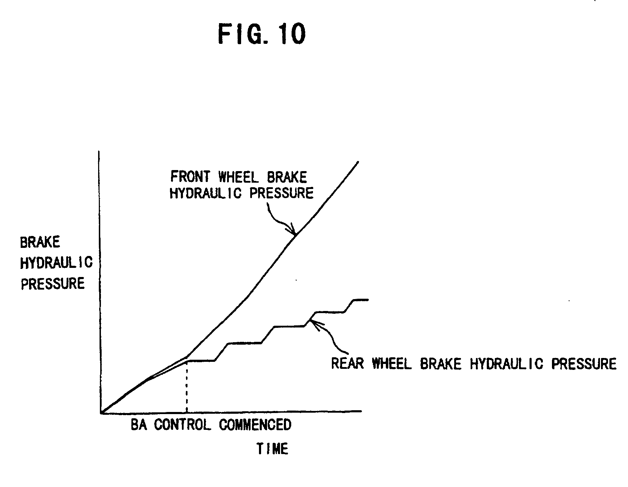

A description will now be given of a second embodiment of the present embodiment by referring to FIG. 9 and FIG. 10. The brake force control apparatus of the present embodiment is achieved by having the ECU 12 perform the control routine shown in FIG. 9 instead of the routine shown in FIG. 6 in the system structure shown in FIG. 1.

The routine shown in FIG. 9 is a flowchart of an example of a control routine performed by the ECU 12 in a second embodiment of the present invention. The routine shown in FIG. 9 is a timed interruption routine started every predetermined time period. Steps that perform the same processes as steps shown in FIG. 6 are given the same names and explanations thereof will be omitted.

In the routine shown in FIG. 9, when it is established in step 102 that $|Gy| > K$, that is, when it has been determined the vehicle is in a predetermined turning condition, the process of a step 110 is performed next. In step 110, a pulse pressure increase control is performed with respect to the wheel cylinders 44RL and 44RR of the rear wheels RL and RR. When the process of step 110 ends the current routine is ended.

In the present embodiment, when performance conditions for BA control are established, the STR26 as well as the $SA_{-3}$ are always in an ON state. Thus, the process of step 110 described above is performed in a state in which the accumulator pressure $P_{ACC}$ is introduced to the upstream side of SRRH68 as well as SRLH70.

Specifically, in step 110 described above, processes for maintaining SRRH68 as well as SRLH70 in an OFF state (valve open state) during a predetermined time $T_2$ after maintaining SRRH68 as well as SRLH70 in an ON state (valve closed state) during a predetermined time $T_1$ are repeatedly performed. According to the processes described above, after the process of step 110 is commenced the wheel cylinder pressure $P_{W/C}$ of the rear wheels RL and RR is raised in stages toward the accumulator pressure $P_{ACC}$.

FIG. 10 shows a change in wheel cylinder pressure $P_{W/C}$ at the front wheels FL and FR as well as the rear wheels RL and RR achieved with a vehicle mounting the brake force control apparatus of the present embodiment when the vehicle is in a predetermined turn. The change in wheel cylinder pressure $P_{W/C}$ shown in FIG. 10 is that which is achieved under conditions in which the vehicle is running straight, an emergency braking operation is commenced at a time $t_0$ and it is determined at a time $t_1$ that the time has arrived to commence BA control. As is shown in FIG. 10, when the vehicle is in a turn, the wheel cylinder pressure $P_{W/C}$ at the front wheels FL and FR is after time $t_1$ raised suddenly to a large fluid pressure. On the other hand, the wheel cylinder pressure $P_{W/C}$ at the rear wheels RL and RR after time $t_1$ is raised in stages.

Thus, according to the brake force control apparatus of the present embodiment, as with the brake force control apparatus of the first embodiment described above, when emergency braking is performed while the vehicle is turning a large brake force can be generated while at the same time reducing the tendency for the vehicle to oversteer.

It should be noted that in the embodiment described above, the "turn condition detecting means" described in Claim 1 is achieved by the ECU 12 reading the detected value of the acceleration sensor 88; at the same time, the "rear wheel brake force suppressing means" described in Claim 1 and the "rise slope reducing means" described in Claim 2 are achieved by the ECU 12 performing the processes of step 102 and step 110 described above. As with the first embodiment, in the above-described embodiment the characteristic value that corresponds to the vehicle turn condition is similarly not limited by the detected value of the acceleration sensor 88.

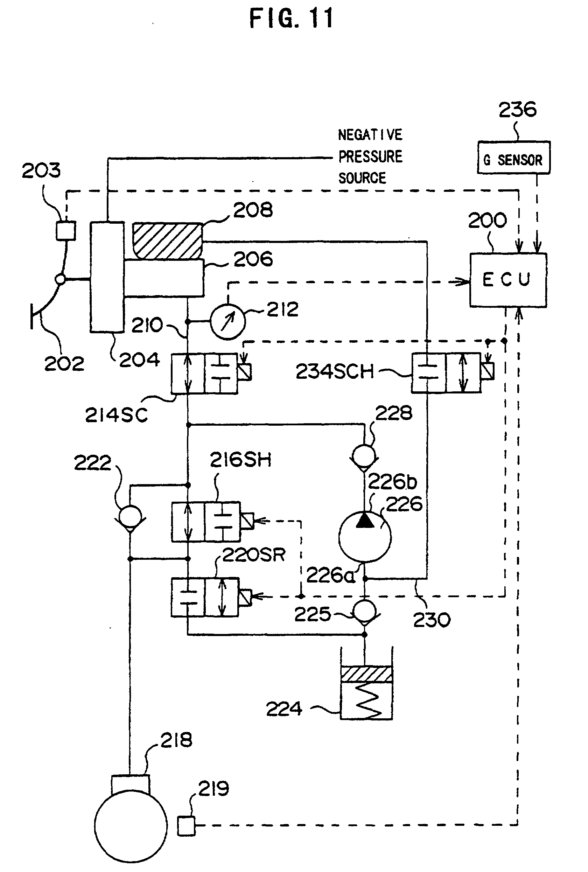

A description will now be given of a third embodiment of the present invention by referring to FIG. 11. FIG. 11 is a diagram of a system structure of a brake force control apparatus of the present embodiment. For convenience of explanation, the system structure of the brake force control apparatus for only one wheel is shown in FIG. 11.

The brake force control apparatus of the present embodiment is controlled by the ECU 200. In the system structure shown in FIG. 11, in the brake force control apparatus of the present embodiment, the routines shown in FIG. 6 and FIG. 9 above are performed by the ECU 200.

The system of the present embodiment comprises a brake pedal 202. A brake switch 203 is provided near the brake pedal 202. The brake switch 203 is a switch that generates an ON output when the brake pedal 202 is pressed. The output signal of the brake switch 203 is supplied to the ECU 200. The ECU 200 determines whether or not a braking operation is being performed by the driver based on the output signal of the brake switch 203.

The brake pedal 202 is connected to a vacuum booster 204. The vacuum booster 204 is an apparatus which assists a brake pressing force by using an intake negative pressure of an internal combustion engine as a power source, and generates an assist force $F_A$ that generates a predetermined brake force with respect a brake pressing force $F_P$ when a brake pressing force $F_P$ is applied to the brake pedal 30. A master cylinder 206 is fixably mounted on the vacuum booster 204. A combined force of a brake pressing force $F_P$ and an assist force $F_A$ is input to the master cylinder 206.

The master cylinder 206 has an internal fluid pressure chamber. Additionally, a reservoir tank is provided on an upper portion of the master cylinder 206. The fluid pressure chamber of the master cylinder 206 and the reservoir tank 208 communicate with each other when the brake pedal 202 is released and are disconnected from each other when the brake pedal 202 is pressed. Accordingly, brake fluid is supplied to the fluid pressure chamber each time the brake pedal 202 is released.

The fluid pressure chamber of the maser cylinder 206 communicates with a fluid pressure passage 210. The fluid pressure passage 210 is provided with a hydraulic pressure sensor 212 which outputs an electrical signal corresponding to a pressure inside the fluid pressure passage 210. The output signal of the hydraulic pressure sensor 212 is supplied to the ECU 200. The ECU 200 detects a fluid pressure generated by the master cylinder 206, that is, the master cylinder pressure $P_{M/C}$, based on the output signal of the hydraulic pressure sensor 212.

The fluid pressure passage 210 is provided with a fluid pressure cutting solenoid 214 (hereinafter referred to as SC 214). The SC 214 is two-position solenoid valve which opens and closes the fluid pressure passage 210, and maintains an open state in a normal state (OFF state). The SC 214 is set to an ON state (closed state) by a drive signal being supplied from the ECU 200.

A holding solenoid 216 (hereinafter referred to as SH 216) is provided on the downstream side of the SC 214 of the fluid pressure passage 210. The SH 216 is a two-position solenoid valve which maintains an open state in a normal state (OFF state). The SH 216 is set to an ON state (closed state) by a drive signal being supplied by the ECU 200.

The downstream side of the SH 216 communicates with a wheel cylinder 218 and a pressure decreasing solenoid 220 (hereinafter referred to as SR 220). The SR 220 is set to an ON state (open state) by a drive signal being supplied by the ECU 200. Additionally, a check valve 222 which permits a fluid flow only in a direction from the wheel cylinder 218 to the fluid pressure passage 210 is provided between the wheel cylinder 218 and the fluid pressure passage 210.

It should be noted that a wheel speed sensor 219 which generates a pulse signal each time the wheel rotates a predetermined angle is provided near the wheel cylinder 218. An output signal of the wheel speed sensor 219 is supplied to the ECU 200. The ECU 200 detects a wheel speed based on the output signal of the wheel speed sensor 219.

A reservoir 224 is provided on the downstream side of the SR 220. Brake fluid flowing out of the SR 220 when the SR 220 is set to the ON state (open state) is stored in the reservoir 224. The reservoir 224 communicates with an inlet port 226a of a pump 226 via a check valve 225. The check valve 225 is a one-way valve which permits a fluid flow only in a direction from the reservoir 224 to the pump 226. An outlet port 226b of the pump 226 communicates with the downstream side of the SC 214 of the fluid pressure passage 210 via a check valve 228. The check valve 228 is a one-way valve which permits a fluid flow only in a direction from the pump 226 to the fluid pressure passage 210.

Additionally, a fluid pressure passage 230 that connects to the reservoir tank 208 communicates with the reservoir 224. A switching solenoid 234 (hereinafter referred to as SCH 234) is provided on the fluid pressure passage 230. The SCH 234 is a two-position solenoid valve which maintains a closed state in a normal state (OFF state). The SCH 234 is opened by a drive signal being supplied from the ECU 300.

Further, the system of the present embodiment has an acceleration sensor 236. The acceleration sensor 236 outputs electrical signals that correspond to the acceleration exerted in the lateral direction on a vehicle mounting the system of the present embodiment. The signal output of the acceleration sensor 236 is supplied to the ECU 200. The ECU 200 determines that the vehicle is in a sharp turn when the signal output of the acceleration sensor 236 exceeds a predetermined value.

A description will now be given of an operation of the brake force control apparatus of the present embodiment. In the present embodiment, after the brake pedal 202 has been pressed the ECU 200 determines whether or not conditions for commencing brake assist control have been established based on the master cylinder pressure $P_{M/C}$ as well as its rate of change $\Delta P_{M/C}$. If the ECU 200 determines that emergency braking has not been performed, then the ECU 200 performs ordinary control; if, on the other hand, the ECU 200 determines that emergency braking has been performed, then the ECU 200 performs BA control. Further, when it is detected that the wheel slip rate S is exceeding a predetermined value the ECU 200 performs ABS control together with normal control and BA control.

In the system of the present embodiment, when the ECU 200 performs normal control the SC 214, SCH 234, SH 216 as well as the SR 220 are all maintained in an OFF state and, at the same time, the pump 226 is maintained in a stopped state. Under such conditions, only the master cylinder 206 can function as a fluid pressure source and, at the same time, all brake fluid flowing from the master cylinder 206 is supplied to the wheel cylinder 218. Accordingly, in this case, the wheel cylinder pressure $P_{W/C}$ of the wheel cylinder 218 is adjusted to a fluid pressure that generates a brake force of a predetermined value with respect to a brake pressing force $F_P$.

If the wheel slip rate S exceeds a predetermined value after braking has been commenced, then the ECU 200, like the ECU 10 of the first embodiment described above, commences ABS control. ABS control is achieved by driving the SH 216 as well as the SR 220 in the manner described below while operating the pump 226 when the brake pedal 202 is being pressed, that is, when the master cylinder pressure $P_{M/C}$ is being increased as appropriate.

When master cylinder pressure $P_{M/C}$ increased as appropriate is output from the master cylinder 204, the wheel cylinder pressure $P_{W/C}$ can be increased to an upper limit value equal to the master cylinder pressure $P_{M/C}$ by setting the SH 216 to an open state and the SR 220 to a closed state. Hereinafter, this state is referred to as pressure increasing mode ①. Additionally, by setting the SH 216 to a closed state and the SR 220 to an open state the wheel cylinder pressure $P_{W/C}$ can be decreased. Hereinafter, these states are referred to as holding mode ② and pressure decreasing mode ③, respectively. The ECU 200 achieves the above-mentioned pressure increasing mode ①, holding mode ② and pressure decreasing mode ③ as necessary so that the wheel slip rate S is held to an appropriate value.

After the brake pedal has been released by the driver during execution of ABS control it is necessary that the wheel cylinder pressure $P_{W/C}$ be decreased immediately. In the system according to the present embodiment, a check valve 222 is provided on the hydraulic circuit corresponding to the wheel cylinder 218. The check valve 222 permits a fluid flow only in a direction from the wheel cylinder 218 to the master cylinder 206. Thus, according to the system of the present embodiment, the wheel cylinder pressure $P_{W/C}$ of the wheel cylinder 222 can be immediately decreased after the brake pedal 202 is released.

In the system according to the present embodiment, when ABS control is performed the wheel cylinder pressure $P_{W/C}$ is increased using the master cylinder 206 as a fluid pressure source. Additionally, the wheel cylinder pressure $P_{W/C}$ is decreased by having the brake fluid in the wheel cylinder flow to the reservoir 224. Accordingly, if the pressure increasing mode and the pressure decreasing mode are performed repeatedly, the brake fluid in the master cylinder 206 gradually flows to the reservoir 224. However, in the system according to the present embodiment, the brake fluid that has flowed into the reservoir 224 is delivered to the master cylinder 206 by the pump 226. Thus, even if ABS control is continued for a long period of time, a so-called bottoming of the master cylinder does not occur.

As described above, the ECU commences BA control after an emergency braking condition requiring that performance of BA control be commenced has been detected. In the system of the present embodiment, BA control is achieved by setting both the SC 214 as well as the SCH 234 to an ON state, that is, by setting the SC 214 to a closed state and the SCH 234 to an open state, arid further by operating the pump 226.

Under such conditions, the master cylinder 206 and the wheel cylinder are disconnected. At the same time, the pump 226 delivers the brake fluid supplied from the reservoir tank 208 via the fluid pressure passage 230 to the wheel cylinder. Thus, the wheel cylinder pressure $P_{W/C}$ of the wheel cylinder 218 is increased by using the pump 226 as a fluid pressure source.

Once the wheel cylinder pressure $P_{W/C}$ is increased as described above, the wheel slip rate S thereafter is rapidly increased and ultimately conditions for performing ABS control are established. When conditions for performing ABS control are established the ECU 200 achieves as necessary the above-mentioned pressure increasing mode ①, holding mode ② and pressure decreasing mode ③ so that the wheel slip rate S is held to an appropriate value.

In the system of the present embodiment, while brake assist control is being performed the SC 214 is maintained in an ON state as described above. When the SC 214 is in an ON state, the fluid pressure chamber of the master cylinder 206 as well as the portion of the fluid pressure passage 210 upstream of the SC 214 form a substantially closed space.

Under such conditions, the master cylinder pressure $P_{M/C}$ becomes a value corresponding to the brake pressing force $F_P$. Accordingly, by monitoring the output signal of the master cylinder pressure $P_{M/C}$ detected by the hydraulic pressure sensor 212, the ECU 200 can easily determine whether or not the brake pedal 202 has been released. Upon detection of the release of the brake pedal 202, the ECU 200 stops the supply of drive signals to the SC 214 as well as the SCH 234 and terminates brake assist control.

It should be noted that, in the system of the present embodiment, the ECU 200 prohibits BA control of the rear wheels and additionally pulse-pressure increases the wheel cylinder pressure $P_{W/C}$ of the rear wheels when conditions are established for performing BA control while a sharp vehicle turn is being detected. In the system of the present embodiment, if the wheel cylinder 218 is assumed to be a rear wheel, then the ECU 200 performs the control described below when conditions for performing BA control have been established while the vehicle is in a sharp turn.

In order to prohibit BA control with respect to the wheel cylinder 218, the ECU 200 performs the following control. That is, when conditions for performing BA control have been established while the vehicle is in a sharp turn the ECU 200 controls in the manner described above a hydraulic circuit that communicates with a wheel cylinder of a front wheel and at the same time maintains in an OFF state the SC 214 as well as SCH 308 installed so as to correspond to the wheel cylinder 218. According to the process described above, the flow of brake hydraulic pressure to the wheel cylinder is prohibited, making it possible to obtain the same effect as with the first embodiment.

In order to pulse-pressure increase control the wheel cylinder 218, the ECU 200 performs the following control. That is, when conditions for performing BA control have been established while the vehicle is in a sharp turn the ECU 200 controls in the manner described above a hydraulic circuit that communicates with a wheel cylinder of a front wheel and at the same time maintains in an ON state the SC 214 installed so as to correspond to the wheel cylinder 218, and further repeatedly switches between an ON state and an OFF state the SCH 234 installed so as to correspond to the wheel cylinder 218. Additionally, the ECU 200 maintains in an ON state the SC 214 installed so as to correspond to the wheel cylinder 218, and further repeatedly switches between an ON state and an OFF state the SH 216 installed so as to correspond to the wheel cylinder 218. According to the process described above, the flow of brake hydraulic pressure to the wheel cylinder is intermittent and rear wheel pulse-pressure increase control is achieved.

It should be noted that, in the embodiment described above, the "turning condition detecting means" described in Claim 1 is achieved by the ECU 200 reading the detected value of the acceleration sensor 236; at the same time, the "rear wheel brake force suppressing means" described in Claim 1 and the "rise slope reducing means" described in Claim 2 are achieved by the ECU 200 performing the processes of step 102 and step 110 described above. Additionally, the "rear wheel brake force suppressing means" described in Claim 1 and the "assist prohibiting means" described in Claim 3 are achieved by the ECU 200 performing the processes of step 102 and step 104 described above.

As described above, according to the present invention, a great increase in brake fluid pressure of the rear wheels attendant upon performance of brake assist control while the vehicle is in a sharp turn can be prevented. Thus, it is possible to restrain the change of vehicle characteristics to the oversteer side by performing brake assist control while the vehicle is turning.

## Claims

1. A brake assist system performing brake assist control, when emergency braking by a driver is detected, for controlling a brake system of a vehicle to increase braking force of all wheel cylinders of the vehicle to a greater braking force than that generated during normal operation irrespective of a magnitude of a brake pressing force by the driver,

    the brake assist system comprising turn condition detecting means (12,88; 200, 236) for detecting a turn characteristic value that corresponds to a turn condition of the vehicle,

    **characterized in that** the brake assist system comprises

    rear wheel brake suppressing means (12, 102, 104; 12, 102, 110; 200, 102, 104; 200, 102, 110) for reducing an increase in brake fluid pressure of rear wheels compared to an increase in brake fluid pressure of front wheels attendant upon performance of the brake assist control when a turn condition value exceeding a predetermined value has been detected during performance of the brake assist control.

2. The brake force control apparatus as claimed in claim 1, **characterized in that** said rear wheel brake force suppressing means comprises a rise slope reducing means (12, 102, 110; 200, 102, 110) for reducing a rise slope of the brake fluid pressure of the rear wheels attendant upon performance of brake assist control as compared to the rise slope that is achieved when a turn characteristic value exceeding a predetermined value is not detected.

3. The brake force control apparatus as claimed in claim 1, **characterized in that** said rear wheel brake force suppressing means further comprises assist prohibiting means (12, 102, 104; 200, 102, 104) that prohibit performance execution of brake assist control at the rear wheels when a turn condition value exceeding a predetermined value has been detected.

## Patentansprüche

1. Bremskraftsteuervorrichtung, die eine Bremsassistentensteuerung durchführt, wenn durch einen Fahrer ausgeübtes Notbremsen erfasst wird, um ein Bremssystem eines Fahrzeugs so zu steuern, dass die Bremskraft aller Radzylinder des Fahrzeugs unabhängig von einer Größe einer durch den Fahrer ausgeübten Bremsdruckkraft auf eine größere Bremskraft als die erhöht wird, die während des Normalbetriebs erzeugt wird, wobei ein Bremsassistentensystem eine Kurvenbedingungserfassungseinrichtung (12, 88; 200, 236) aufweist, um einen Kurvencharakteristikwert zu erfassen, der einer Kurvenbedingung des Fahrzeugs entspricht, **dadurch gekennzeichnet, dass** das Bremsassistentensystem eine Hinterradbremsunterdrückungseinrichtung (12, 102, 104; 12, 102, 110; 200, 102, 104; 200, 102, 110) aufweist, um eine Erhöhung des Bremsfluiddrucks der Hinterräder im Vergleich zu einer Erhöhung des Bremsfluiddrucks der Vorderräder verbunden mit der Durchführung der Bremsassistentensteuerung zu verringern, wenn ein Kurveneigenschaftswert, der einen vorab bestimmten Wert überschreitet, während der Durchführung der Bremsassistentensteuerung erfasst wird.

2. Bremskraftsteuervorrichtung nach Anspruch 1, **dadurch gekennzeichnet, dass** die Hinterradbremskraftunterdrückungseinrichtung eine Anstiegssteigungsverringerungseinrichtung (12, 102, 110; 200, 102, 110) aufweist, um eine Anstiegssteigung des Bremsfluiddrucks der Hinterräder verbunden mit der Durchführung der Bremsassistentensteuerung im Vergleich zu der Anstiegssteigung zu verringern, die erreicht wird, wenn ein Kurvencharakteristikwert, der einen vorab bestimmten Wert überschreitet, nicht erfasst wird.

3. Bremskraftsteuervorrichtung nach Anspruch 1, **dadurch gekennzeichnet, dass** die Hinterradbremskraftunterdrückungseinrichtung weiterhin eine Assistenzverhinderungseinrichtung (12, 102, 104; 200, 102, 104) aufweist, welche die Durchführung der Bremsassistentensteuerung an den Hinterrädern verhindert, wenn ein Kurveneigenschaftswert, der einen vorab bestimmten Wert überschreitet, erfasst wird.

**Revendications**

1. Système de freinage assisté effectuant une commande de freinage assisté lorsque le freinage d'urgence par un conducteur est détecté, pour commander un système de frein d'un véhicule pour augmenter la force de freinage de la totalité des cylindres de roues du véhicule à une force de freinage plus grande que celle produite pendant l'opération normale sans tenir compte de la grandeur de la force de pression des freins par le conducteur,

   le système de freinage assisté comprenant un moyen de détection de condition de braquage (12, 88 ; 200, 236) pour détecter une valeur caractéristique de braquage qui correspond à une condition de braquage du véhicule,

   **caractérisé en ce que** le système de freinage assisté comprend :

   un moyen de suppression de freins de roues arrière (12, 102, 104 ; 12, 102, 110 ; 200, 102, 104 ; 200, 102, 110) pour réduire une augmentation de la pression du fluide des freins des roues arrière comparée à une augmentation de la pression de fluide des freins des roues avant découlent de l'exécution de la commande de freinage assisté, lorsqu'une valeur de condition de braquage dépassant une valeur prédéterminée a été détectée pendant l'exécution de la commande de freinage assisté.

2. Appareil de commande de force de freinage selon la revendication 1, **caractérisé en ce que** ledit moyen de suppression de force de frein de roue arrière comprend un moyen de réduction de pente montante (12, 102, 110 ; 200, 102, 110) pour réduire une pente montante de la pression du fluide des freins des roues arrière découlant de l'exécution de la commande de freinage assisté lorsque comparé à la pente montante qui est obtenue lorsqu'une valeur caractéristique de braquage dépassant une valeur prédéterminée n'est pas détectée.

3. Appareil de commande de force de freinage selon la revendication 1, **caractérisé en ce que** ledit moyen de suppression de force des freins de roues arrière comprend, en outre, un moyen d'empêchement d'assistance (12, 102, 104 ; 200, 102, 104) qui empêche l'exécution de la performance de la commande de freinage assisté au niveau des roues arrière lorsqu'une valeur de condition de braquage dépassant une valeur prédéterminée a été détectée.

# FIG. 1

EP 0 919 444 B1

# FIG. 2

# FIG. 3

# FIG. 4

YAW RATE 1 SECOND AFTER COMMENCING BRAKING

ORDINARY VEHICLE MOVEMENT

TENDENCY TO OVERSTEER

TENDENCY TO UNDERSTEER

TRACING A STANDARD CIRCLE TURN

$\gamma_O$

$G_I$  $G_O$

BRAKE DECELERATION $G_X$

# FIG. 5

$CF_{FR}$  FR

FL  $BF_{FR}$

$CF_{FL}$

$BF_{FL}$  $CF_{RR}$  RR

RL  $BF_{RR}$

$CF_{RL}$

$BF_{RL}$

# FIG. 6

```
                    ( START )
        100
          ╲                            NO
      ╱ BA CONTROL OPERATING? ╲ ──────────────────┐
      ╲                       ╱                    │
             YES                                   │
        102                                        │
          ╲                            YES         │
        ╱   |Gy|>K?   ╲ ────────────────┐          │
        ╲             ╱                 │          │
             NO                         ▼          │
              │                  ┌──────────────┐  │
              │                  │ PROHIBITING BA CONTROL │  104
              │                  │ TO REAR WHEELS │  │
              │                  └──────────────┘  │
              │                         │          │
              │◄────────────────────────┘          │
              │◄───────────────────────────────────┘
              ▼
         ( RETURN )
```

# FIG. 7

# FIG. 8

# FIG. 9

```
                    ┌─────────────┐
                    │   START     │
                    └──────┬──────┘
                           │
  100 ╲            ◇─────────────────◇      NO
       ╲──────────< BA CONTROL OPERATING? >──────────┐
                   ◇─────────────────◇               │
                           │ YES                      │
                           │                          │
  102 ╲            ◇──────────────◇      YES          │
       ╲──────────<   |Gy| > K ?   >──────┐           │
                   ◇──────────────◇       │           │
                           │ NO           │           │
                           │              ▼           │
                           │      ┌──────────────────┐│  110
                           │      │ PULSE INCREASE   ││
                           │      │ CONTROL          ││
                           │      │ TO REAR WHEELS   ││
                           │      └────────┬─────────┘│
                           │               │          │
                           ◄───────────────┘          │
                           ◄──────────────────────────┘
                           │
                    ┌──────▼──────┐
                    │   RETURN    │
                    └─────────────┘
```

# FIG. 10

BRAKE
HYDRAULIC
PRESSURE

FRONT WHEEL BRAKE
HYDRAULIC PRESSURE

REAR WHEEL BRAKE HYDRAULIC PRESSURE

BA CONTROL COMMENCED

TIME

# FIG. 11